(19) Europäisches Patentamt

European Patent Office

Office européen des brevets

(11) **EP 4 604 048 A1**

(12) **DEMANDE DE BREVET EUROPEEN**

(43) Date de publication:
**20.08.2025   Bulletin 2025/34**

(21) Numéro de dépôt: **25156840.8**

(22) Date de dépôt: **10.02.2025**

(51) Classification Internationale des Brevets (IPC):
**G06T 3/4015** (2024.01)        **G06N 3/045** (2023.01)
**G06N 3/084** (2023.01)

(52) Classification Coopérative des Brevets (CPC):
**G06T 3/4015; G06N 3/045; G06N 3/084**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité:  **15.02.2024   FR 2401481**

(71) Demandeur: **Commissariat à l'Energie Atomique et aux Energies Alternatives**
**75015 Paris (FR)**

(72) Inventeur: **GUICQUERO, William**
**38054 GRENOBLE CEDEX 09 (FR)**

(74) Mandataire: **Cabinet Beaumont**
**4, Place Robert Schuman**
**B.P. 1529**
**38025 Grenoble Cedex 1 (FR)**

(54)     **RECONSTRUCTION ET TRAITEMENT D'IMAGES**

(57)     La présente description concerne un procédé d'apprentissage d'un réseau de neurones (202) comprenant :
- la génération d'une image modifiée, par un générateur de données modifiées, sur la base d'une première image, l'image modifiée comprenant au moins une valeur de pixel aberrante par rapport à la première image ;
- la fourniture de l'image modifiée au réseau ;
- la génération, par le réseau, d'une image corrigée ;
- la fourniture de l'image corrigée, par le réseau, et la fourniture d'une indication de la position de l'au moins un pixel modifié, par le générateur, à un circuit de calcul (210)
- la génération d'une valeur d'erreur, sur la base de l'application d'une fonction de coût, par le circuit de calcul, prenant en entrée la première image, l'indication et l'image corrigée ;
- la correction de paramètres associés au réseau par rétropropagation de l'erreur dans le réseau.

**EP 4 604 048 A1**

**Fig. 2**

**Description**

Domaine technique

La présente description concerne de façon générale les procédés et dispositifs pour la reconstruction et le traitement d'images et en particulier, les procédés et dispositifs pour le dématriçage d'images.

Technique antérieure

Des images brutes acquises par des capteurs d'images, tel que par exemple des capteurs dédiés à l'imagerie visible et/ou infrarouge, présentent des altérations dues à des dysfonctionnements des capteurs. En particulier, les capteurs d'images mettant en oeuvre des systèmes d'imagerie canonique, utilisant des méthodes de matriçage de pixels unitaires, peuvent présenter, dans leur durée de vie, des dysfonctionnements sur des pixels isolés, ou sur des colonnes de pixels et/ou des perte de données capturées pour des pixels isolés ou des colonnes de pixels.

Il est souhaitable d'améliorer le traitement et la reconstruction d'images acquises par des capteurs comprenant des pixels dysfonctionnels.

Résumé de l'invention

Un mode de réalisation prévoit un procédé d'apprentissage d'un réseau de neurones configuré pour réaliser des opérations de traitement d'images, le procédé comprenant :

- la génération d'une image modifiée, par un générateur de données modifiées, sur la base d'une première image, l'image modifiée comprenant au moins une valeur de pixel aberrante par rapport à la première image ;
- la fourniture de l'image modifiée au réseau ;
- la génération, par le réseau, d'une image corrigée ;
- la fourniture de l'image corrigée, par le réseau, et la fourniture d'une indication de la position de l'au moins un pixel modifié, par le générateur, à un circuit de calcul
- la génération d'une valeur d'erreur, sur la base de l'application d'une fonction de coût, par le circuit de calcul, prenant en entrée la première image, l'indication et l'image corrigée ;
- la correction de paramètres associés au réseau par rétropropagation de l'erreur dans le réseau.

Selon un mode de réalisation, la génération de l'image corrigée par le réseau comprend :

- la génération, par un premier sous module, d'une valeur de donnée intermédiaire sur la base de l'image modifiée, la donnée intermédiaire étant une reconstruction au moins partielle de la première image ;
- la génération, par un deuxième sous module du réseau, d'une donnée d'attention sur la base d'une de la donnée intermédiaire et/ou de l'image modifiée, la donnée d'attention comprenant une estimation de localisation de l'au moins un pixel modifié ;
- la génération de l'image corrigée, par le premier sous circuit ou par un troisième sous circuit, sur la base de la donnée intermédiaire et de la donnée d'indication.

Selon un mode de réalisation, la génération de la donnée d'attention comprend l'exécution d'un réseau de neurones convolutif configuré pour la segmentation d'images, sur la base de la donnée intermédiaire et/ou de l'image corrigée.

Selon un mode de réalisation, le réseau de neurones convolutif est un réseau de type U-net ou une variante d'un réseau de type U-net.

Selon un mode de réalisation, la génération de la donnée d'attention comprend en outre une normalisation de type norme NL1, sur la base de la donnée générée par le réseau de neurones convolutif.

Selon un mode de réalisation, la génération de l'image corrigée comprend une opération de multiplexage et/ou une opération de multiplication, par exemple une multiplication point à point, sur la base de la donnée d'attention et de la donnée intermédiaire.

Selon un mode de réalisation, la génération d'une valeur d'erreur comprend l'application d'une fonction de coût focalisée prenant, en données d'entrée, l'image modifiée, la première image et l'indication de localisation de l'au moins un pixel modifié.

Selon un mode de réalisation, la génération d'une valeur d'erreur comprend en outre l'application :

- d'une fonction de coût basée sur un calcul de moyenne prenant, en données d'entrée, l'image modifiée et la première image ; et/ou
- d'une fonction de de régularisation prenant, en donnée d'entrée, l'image modifiée.

Selon un mode de réalisation, la première image est comprise dans une base de données.

Selon un mode de réalisation, la génération de l'image modifiée comprend, pour chaque pixel :

- la détermination de si le pixel est à modifier ; et
- si le pixel est à modifier, le remplacement de la valeur associée au pixel par une valeur aberrante.

Selon un mode de réalisation, la génération de l'image modifiée, par le générateur de données modifiées, est réalisée en outre sur la base d'un motif de matriçage.

Selon un mode de réalisation, le modèle du générateur de données modifiées est un modèle de réseau de neurone préalablement entraîné à la génération d'image modifiée, et configuré pour la mise en oeuvre de technique dites de « transfert de style ».

Un mode de réalisation prévoit un procédé de traitement d'image comprenant :

- la capture d'une scène image, par un imageur d'un dispositif de traitement d'image, l'image capturée étant une image matricée selon un motif de matriçage
- la fourniture de l'image matricée à un réseau de neurones du dispositif de traitement entraîné selon le procédé d'entrainement ci-dessus ; et
- la génération d'une image corrigée, par le réseau, sur la base de l'image matricée.

Selon un mode de réalisation, la génération de l'image corrigée par le réseau comprend :

- la fourniture de l'image matricée à un premier sous module du réseau configuré pour générer une donnée intermédiaire en effectuant un premier dématriçage de l'image matricée ;
- la fourniture de la donnée intermédiaire à un deuxième sous module du réseau configuré pour générer une donnée d'attention sur la base de la donnée intermédiaire, la donnée d'attention comprenant des estimations de localisation de pixels dysfonctionnels de l'imageur ; et
- la génération de l'image corrigée, par un troisième sous module, sur la base de la donnée intermédiaire et de la donnée d'attention.

Selon un mode de réalisation, le motif de matriçage correspond à un motif de matriçage utilisé lors de la génération d'une image modifiée pendant l'apprentissage du réseau.

Un mode de réalisation prévoit un dispositif de traitement d'image comprenant :

- un imageur configuré pour capturer des scènes image, selon un motif de matriçage ;
- un réseau de neurone entraîné selon le procédé d'entrainement ci-dessus, configuré pour générer une image corrigée sur la base de l'image matricée.

Selon un mode de réalisation, l'imageur comprend un ou plusieurs pixels dysfonctionnels.

<u>Brève description des dessins</u>

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente des exemples de motifs de matriçage mis en oeuvre par des capteurs d'images ;

la figure 2 est un schéma par blocs illustrant une architecture d'apprentissage d'un réseau de neurones, selon un mode de réalisation de la présente description ;

la figure 3 est un schéma par blocs illustrant une architecture du réseau configuré pour effectuer des opérations d'inférence, selon un mode de réalisation de la présente description ;

la figure 4 est un exemple d'architecture d'un réseau de traitement, selon un mode de réalisation de la présente description ;

la figure 5 est un exemple d'architecture d'un module d'attention, selon un mode de réalisation de la présente description ; et

la figure 6 est un exemple d'architecture d'un réseau de traitement, selon un mode de réalisation de la présente description.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, le fonctionnement et l'implémentation de différents types de couches de réseaux de neurones, tels que les couches denses, les couches de convolution, etc., ne sont pas décrits en détail et sont connus par la personne du métier.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

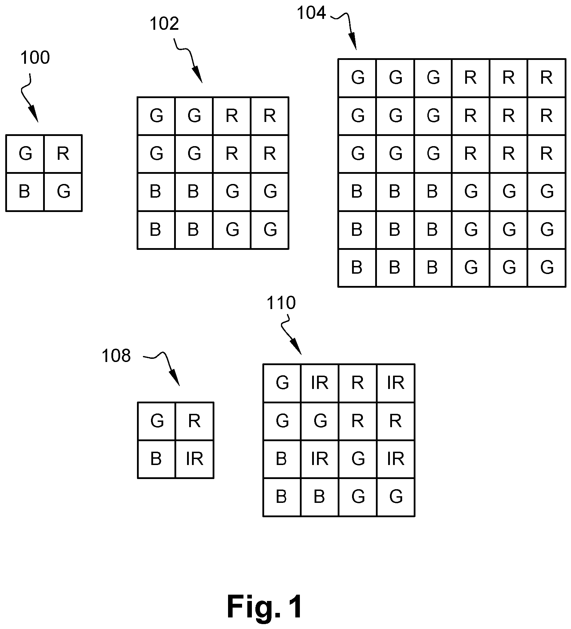

La figure 1 représente des exemples de motifs de matriçage mis en oeuvre par des capteurs d'images, ou imageurs.

Un motif de matriçage est un motif comprenant plusieurs pixels et faisant office de filtre spectral répliqué, en mosaïque, à la surface d'un imageur. L'imageur mesure alors, pour chaque pixel de la mosaïque, une valeur associée à un canal défini par le motif de matriçage. Le motif de matriçage indique, pour chaque pixel, quel unique canal parmi, par exemple, des canaux couleurs et/ ou infrarouge est mesuré. A titre d'exemple, chaque pixel a une signature spectrale déterminant un intervalle de longueurs d'onde comprenant la réponse spectrale enregistrée par le pixel.

Dans l'exemple de la figure 1, un motif de matriçage 100 est un motif de type Bayer. Ce motif est de taille 2×2 pixels et permet la mesure des longueurs d'ondes associées à la couleur verte (G) pour les pixels en haut à gauche et en bas à droite du motif. Le motif de Bayer permet en outre la mesure des longueurs d'ondes associées à la couleur rouge (R) du pixel en haut à droite ainsi que la mesure des longueurs d'ondes associées à la couleur bleue (B) en bas à gauche du motif.

Un motif de matriçage 102 est un motif de type QuadBayer. Ce motif est de taille 4×4 pixels et permet la mesure des longueurs d'ondes associées à la couleur verte (G) pour les quatre pixels en haut à gauche et en bas à droite, du motif. Le motif de matriçage 102 permet en outre la mesure des longueurs d'ondes associées à la couleur rouge (R) pour les pixels en haut à droite ainsi que la mesure des longueurs d'ondes associées à la couleur bleue (B) pour les quatre pixels en bas à gauche du motif.

Un motif 104 est un motif de type 3-cell Bayer. Ce motif est de taille 6×6 pixels et a la même structure que les motifs 100 et 102 à l'exception du fait que les canaux couleur rouge, vert et bleu sont mesurés par groupes de 3×3 pixels.

Un motif 108 est un motif de type RGBIR 2x2. Ce motif est de taille 2×2 pixels et permet la mesure des longueurs d'ondes associées à la couleur verte pour le pixel en haut à gauche du motif. Le motif 108 permet en outre la mesure des longueurs d'ondes associées à la couleur bleue du pixel en haut à droite ainsi que la mesure des longueurs d'ondes associées à la couleur rouge en bas à gauche du motif. Le motif 108 permet en outre la mesure des longueurs d'ondes associées aux infrarouges (IR) du pixel en bas à droite.

Un motif 110 est un motif de type RGBIR 4x4. Ce motif est de taille 4×4 pixels et permet la mesure des longueurs d'ondes associées à la couleur verte du premier pixel en partant de la gauche sur la première ligne, du troisième pixel en partant de la gauche sur la troisième ligne, des premier et deuxième pixels en partant de la gauche sur la deuxième ligne et des troisième et quatrième pixels en partant de la gauche sur la quatrième ligne. Le motif 110 permet en outre la mesure des longueurs d'ondes associées aux infrarouges des deuxième et quatrième pixels en partant de la gauche des première et troisième lignes. Le motif 110 permet en outre la mesure des longueurs d'ondes associées à la couleur bleue du premier pixel en partant de la gauche de la troisième ligne et des premier et deuxième pixels en partant de la gauche de la quatrième ligne, ainsi que la mesure des longueurs d'ondes associées à la couleur rouge du troisième pixel en partant de la gauche de la première ligne et des troisième et quatrième pixels en partant de la gauche de la deuxième ligne.

Ces exemples de motifs de matriçage sont donnés à titre d'exemple et ne sont bien sûr pas limitatifs. D'autres motifs de matriçage, de taille et d'agencement différents, sont, bien sûr, envisageables. Dans d'autres exemples, le motif de matriçage répliqué sur la surface de l'imageur comprend un pixel configuré pour mesurer une distance entre une ou plusieurs cibles dans la scène capturée et l'imageur. De tels imageurs sont des capteurs d'image couleur permettant en outre de capturer une information dite de profondeur, on parle alors d'imageurs RGBZ monolithiques.

Une image brute capturée par l'imageur comprend par exemple, pour chaque pixel, une unique valeur mesurée. Le dématriçage consiste alors en l'estimation, pour chaque pixel, de la valeur des canaux non mesurés en utilisant, par exemple, la corrélation spectrale entre les canaux mesurés ainsi que la corrélation spatiale entre la valeur d'un même canal pour deux pixels adjacents.

Cependant, il arrive, que certains pixels soient dysfonctionnels. A titre d'exemple, un ou plusieurs pixels isolés deviennent saturés, ou inutilisables. On parlera alors de pixel mort. A titre d'exemple, le signal dit de Dark, ou courant d'obscurité, représentant un type de bruit en absence de flux lumineux mesuré pour des pixels isolés sort de la statistique nominale et les mesures associées à ces pixels sont alors aberrantes. D'autres sources de bruits peuvent causer un comportement aberrant sur un pixel ou sur un groupe de pixels. A titre d'exemple, certains pixels isolés sont soumis à un bruit télégraphique (en anglais « Random Telegraphic Signal » - RTS). A titre d'exemple, suite à un dysfonctionnement d'un circuit de lecture de l'imageur, des colonnes de pixels sont manquantes, ou clampées. Dans d'autres exemple, un défaut numérique, tel que par exemple une perte de synchronisation dans les mesures, ou une inversion de bits (en anglais « bit-flip »), entraîne une perte de données associées à des pixels isolés et/ou des colonnes et/ou des lignes de pixels et/ou une ou plusieurs trames de pixel. Dans la suite, on qualifiera de mauvais pixel (en anglais « bad pixel ») tout pixel dysfonctionnel, qu'il soit isolé ou dans une colonne, ligne, ou trame, dysfonctionnelle. Les mesures associées aux mauvais pixels sont alors des mesures aberrantes, ne s'approchant pas de la réalité.

De plus, les mauvais pixels vont, par exemple, influer sur l'estimation des pixels adjacents lors du dématriçage. A titre d'exemple, l'image finale, obtenue suite à un dématriçage ne corrigeant pas les mauvais pixels, présentera par exemple des taches noires de taille supérieure au mauvais pixel ou au groupe de mauvais pixels.

Cependant, les mesures aberrantes associées à de mauvais pixels sont relativement peu fréquentes. En effet, les dysfonctionnements sus mentionnés ont en général une occurrence faible, de l'ordre de 1/1000 ou moins. Cependant, dans les imageurs comprenant de très nombreux pixels, ces dysfonctionnements peuvent être impactant par rapport au rendu visuel et pour la perception de l'image. A titre d'exemple, ces dysfonctionnements impactent le rendu de l'image de manière beaucoup plus visible que des désordres dus à un bruit homoscédastique dont la distribution est centrée autour de zéro.

Lorsqu'un réseau de neurones profond est entraîné pour dématricer des images brutes, les mesures aberrantes, associée aux mauvais pixels, sont noyées dans les autres bruits, dû à leur occurrence rare. De plus, les fonctions de coûts classiques, basées majoritairement sur des calculs de moyenne et s'appliquant de façon canonique quelle que soit la position du pixel, échouent à identifier et corriger ce type d'erreurs aberrantes.

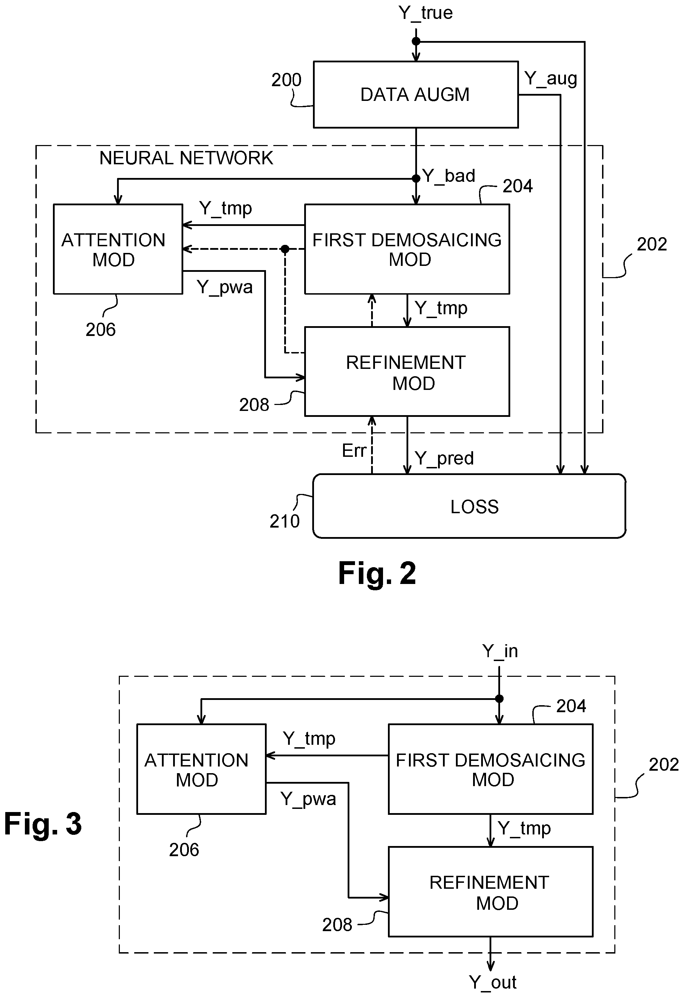

La figure 2 est un schéma par blocs illustrant une architecture d'apprentissage d'un réseau de neurones profond, selon un mode de réalisation de la présente description. En particulier, l'apprentissage du réseau de neurones décrit en relation avec la figure 2 permet la prise en compte des erreurs aberrantes, par exemple dues aux mauvais pixels, dans la reconstruction d'image.

Selon un mode de réalisation, un module d'augmentation 200 (DATA AUGM) permet par exemple l'exécution d'un modèle d'augmentation des données. A titre d'exemple, le module 200 est configuré pour recevoir, en donnée d'entrée, une image Y_true correspondant à une vérité terrain, c'est à dire à une image ne comprenant pas d'erreur issue d'un quelconque traitement. A titre d'exemple, chaque pixel de l'image Y_true comprend les valeurs terrains de plusieurs canaux. Le module 200 est en outre configuré pour générer une image modifiée Y_bad, sur la base de l'image Y_true. L'image modifiée Y_bad correspond alors à l'image Y_true, dans un format matricé, à laquelle est ajoutée une ou plusieurs erreurs aberrantes.

A titre d'exemple, le module 200 est configuré pour modéliser des bruits de type bruits de lecture pixel et de lecture colonne, des bruits photoniques, des bruits spatiaux fixes, par exemple structurés, des bruits de type télégraphique, et des pixels morts ou saturés.

A titre d'exemple, le module 200 est configuré pour ajouter à chaque pixel, avec une probabilité au plus égale à 1/1000, une valeur aberrante. Autrement dit, le module 200 effectue, pixel à pixel, une épreuve de Bernoulli, de paramètre p, où p est au plus égale à 1/1000. Lorsque l'épreuve de Bernoulli réussie, le module 200 est configuré pour modifier la valeur du pixel associée vers une valeur aberrante. Lorsque l'épreuve échoue, dans la majorité des cas, la valeur du pixel reste identique à celle pour l'image Y_true. Dans un autre exemple, lorsque l'épreuve échoue, un ou plusieurs bruits sont ajoutés à la valeur du pixel. A titre d'exemple, la valeur aberrante est une valeur constante. Dans un autre exemple, la valeur aberrante est issue, pour chaque pixel concerné, d'un tirage aléatoire. La valeur aberrante est par exemple ajoutée à la valeur mesurée pour ledit pixel. Dans un autre exemple, la valeur aberrante est multipliée à la valeur mesurée pour ledit pixel. Encore dans un autre exemple, la valeur aberrante est substituée à la valeur mesurée pour ledit pixel. Dans un autre exemple, pour chaque pixel concerné, plusieurs valeurs aberrantes sont par exemple déterminées, de manière

**5**

aléatoire ou non, et la valeur mesurée du pixel est remplacée par une combinaison d'au moins une addition d'une valeur aberrante avec la valeur mesurée et/ou d'une multiplication d'une valeur aberrante avec la valeur mesurée.

A titre d'exemple, la génération de la valeur aberrante est effectuée selon une distribution de probabilité fortement piquée, c'est à dire ayant un moment d'ordre 4 élevé, tel que par exemple, une loi de Laplace, une loi de Cauchy, etc.

Les procédés et circuits pour la génération d'une telle image modifiée sont connues par la personne du métier et l'exemple donné de génération n'est bien sûr pas limitatif.

Le module 200 est en outre configuré pour générer une donnée Y_aug, par exemple prenant la forme d'un tenseur, comprenant des indications des positions des pixels modifiés. A titre d'exemple, la donnée Y_aug comprend en outre une indication des valeurs aberrantes ayant été attribuées.

A titre d'exemple, les images terrain, fournies au module 200 sont comprises dans une base de données préenregistrée, par exemple dans une mémoire non volatile, telle qu'un serveur, etc.

Le module 200 est par exemple configuré pour fournir l'image modifiée Y_bad à un réseau de neurones 202 (NEURAL NETWORK) afin de l'entrainer. A titre d'exemple, le réseau 202 est configuré pour effectuer des tâches de régression afin de reconstruire et de dématricer une image matricée lui étant fournie tout en prenant compte d'éventuels mauvais pixels. A titre d'exemple, des paramètres du réseau, tels que des poids etc., sont initialement fixés à des valeurs initiales.

Selon un mode de réalisation, le motif de matriçage utilisé, par le module 200, pour matricer l'image Y_true correspond au motif de matriçage qui sera utilisé par un capteur d'image d'un dispositif comprenant le réseau 202 entraîné.

Dans un autre mode de réalisation, le module 200 comprend un réseau de neurones préalablement entraîné à générer des images, telles que par exemple des images matricées. A titre d'exemple, la génération des images est réalisée à l'aide de techniques dites de « transfert de style », telles que, par exemple, les techniques décrites dans la publication « Unsupervised Image-to-Image Translation : A review » par Hoyer, H. et al. et publiée dans Sensors en 2022 et/ou dans l'article de vulgarisation sur les cycles GAN « A Gentle Introduction to CycleGAN for Image Translation » écrit par Brownlee, J. le 17 août 2017.

Le réseau 202 comprend, par exemple, un sous module de traitement 204 (FIRST DEMOSAICING MOD) configuré pour générer une donnée intermédiaire Y_tmp, sur la base de l'image modifiée Y_bad. La donnée intermédiaire Y_tmp correspond, par exemple, à un premier dématriçage et reconstruction de l'image. A titre d'exemple, le module 204 est un réseau convolutionnel intégrant plusieurs couches neuronales.

Le réseau 202 comprend, par exemple, en outre, un sous module d'attention 206 (ATTENTION MOD) configuré pour recevoir la donnée intermédiaire Y_tmp, ou une sous partie de celle-ci, fournie par le module 204 et/ou l'image modifiée Y_bad fournie par le module d'augmentation 200. Le sous module 206 est en outre configuré pour générer une donnée d'attention Y_pwa ayant, par exemple, la forme d'un tenseur. La donnée Y_pwa est générée par le sous module 206 de sorte à porter l'information de l'image modifiée pixel par pixel. En particulier, le sous module 206 est conçu pour mettre en oeuvre, en premier lieu, une segmentation de l'image, pixel par pixel, afin de déterminer pixel par pixel un type de dématriçage à réaliser. Le sous module 206 est en outre configuré pour générer la donnée Y_pwa de sorte que celle-ci comprenne une information d'un type de traitement à opérer pixel par pixel, telle que par exemple une opération de masquage (en anglais « gating »). Le masquage est par exemple effectué sur les données du tenseur Y_tmp à l'aide du signal Y_pwa afin de pondérer chaque type de reconstruction présent dans le tenseur Y_tmp en fonction du tenseur Y_pwa.

Le réseau 202 comprend, par exemple, en outre un sous module de raffinement 208 (REFINEMENT MOD). A titre d'exemple, le sous module 208 est configuré pour générer une image corrigée Y_pred sur la base de la donnée intermédiaire Y_tmp fournie par le sous module 204 et de la donnée d'attention Y_pwa fournie par le sous module 206.

Dans un autre exemple, le sous module 208 est configuré pour effectuer un masquage de Y_tmp dans l'axe des canaux, sur la base de la donnée Y_pwa.

Durant l'entrainement du réseau 202, l'image corrigée Y_pred est fournie à un circuit de calcul 210 (LOSS). Le circuit de calcul 210 est en outre configuré pour recevoir l'image terrain Y_true et la donnée Y_aug comprenant les indications des positions où les valeurs aberrantes ont été ajoutées par le module 200.

A titre d'exemple, la donnée Y_aug est un tenseur à valeur dans {0,1}, les pixels affectés à la valeur 1 indiquent par exemple les positions des mauvais pixels.

Selon un mode de réalisation, le circuit de calcul 210 est configuré pour calculer une valeur d'erreur Err en appliquant une fonction de coût (en anglais « loss function ») à l'image modifiée Y_pred, l'image terrain Y_true et la donnée Y_aug. A titre d'exemple, la fonction de coût appliquée par le circuit de calcul 210 combine plusieurs fonctions de coût de fidélité, telles qu'une fonction de coût basée sur des calculs d'erreurs moyennes sans à priori et appliquée entre les données Y_pred et Y_true, ou une fonction de coût focalisée (en anglais « Focal Loss Function » - LFF) appliquée sur les données Y_pred, Y_true et Y_aug pour laquelle la focalisation est, par exemple, contrôlée par le tenseur Y_aug. A titre d'exemple, la fonction de coût appliquée par le circuit de calcul 210 comprend en outre une fonction de régularisation appliquée uniquement à l'image corrigée Y_pred. A titre d'exemple, la fonction de régularisation est déterminée à partir d'hypothèses sur la nature du signal de l'image corrigée Y_pred.

A titre d'exemple, la valeur d'erreur est telle que $Err = \lambda_{LFM} \times LFM(Y\_pred, Y\_true) + \lambda_{LFF} \times LFF(Y\_pred, Y\_true, Y\_aug) + \lambda_{LR} \times LR(Y\_pred)$ où la fonction LFM est une fonction de coût basée sur des calcul d'erreurs moyennes, par exemple basée sur un calcul d'erreur quadratique moyenne, la fonction LFF est une fonction de coût focalisée et la fonction LR est une fonction de régularisation, et où $\lambda_{LFM}$, $\lambda_{LFF}$ et $\lambda_{LR}$ sont des coefficients de pondération. A titre d'exemple, les coefficients $\lambda_{LFM}$, $\lambda_{LFF}$ et $\lambda_{LR}$ sont utilisés pour accentuer l'importance d'une fonction de coût par rapport à une autre.

A titre d'exemple, l'erreur moyenne $LFM(Y\_pred, Y\_true)$ est telle que :

[Math 1]

$$LFM(Y\_pred, Y\_true)$$
$$= \lambda_1 \sum |CNN(Y\_pred) - CNN(Y\_true)|$$
$$+ \lambda_2 \sqrt[2]{|CNN(Y\_pred) - CNN(Y\_true)|^2},$$

où CNN(.) est une sortie intermédiaire d'un modèle de réseau de neurones ayant été préalablement entraîné à réaliser certaines tâches d'inférence. A titre d'exemple, CNN(.) a été entraîné de manière supervisée en vue d'alimenter un sous-modèle dédié à des tâches de classification d'image. Par exemple, le réseau de neurones s'appuie sur un espace latent issu d'un modèle de réseau de neurones entraîné à réaliser des opérations de classifications sur des bases de données, telle que par exemple la base de données ImageNET. A titre d'exemple, la fonction CNN (.) est une fonction vgg(.) où *vgg*(.) est une fonction retournant un espace latent, par exemple de type vgg16, les coefficients $\lambda_1$ et $\lambda_2$ sont des coefficients de pondération entre des calculs de distance de type L1 et L2. En particulier, la somme s'effectue sur tous les éléments, c'est à dire, sur tous les pixels et tous les canaux.

A titre d'exemple, l'erreur focalisée $LFF(Y\_pred, Y\_true, Y\_aug)$ est telle que :

[Math 2]

$$LFF(Y\_pred, Y\_true, Y\_aug) = \sum \left( \left(dilate(Y\_aug)\right) \odot (Y\_pred - Y\_true) \right)^2,$$

où *dilate*(.) définit une fonction morphologique de dilatation, par exemple ayant un noyau circulaire 5x5 et où l'opérateur $\odot$ correspond à la multiplication point par point. En particulier, la fonction *dilate*(.) permet d'augmenter le rayon d'impact de la fonction de coût au voisinage des pixels aberrants, permettant alors de corriger plus facilement les effets dus à de larges champs réceptifs du réseau de neurones convolutif utilisé pour reconstruire l'image.

A titre d'exemple, l'erreur de régularité $LR(Y\_pred)$ est telle que :

[Math 3]

$$LR(Y\_pred) = TV(Y\_pred),$$

où TV(.) correspond, par exemple, au calcul de la variation totale, ou à une variante de la variation totale. L'usage de la variation totale comme fonction de régularisation est donnée à titre d'exemple et n'est bien sûr pas limitative.

Selon un mode de réalisation, lors de l'entrainement du réseau 202, la valeur d'erreur obtenue est rétro-propagée dans le réseau 202 afin de réévaluer et mettre à jour les paramètres associés au réseau 202. A titre d'exemple, la mise à jour des paramètres s'effectue par la mise en oeuvre d'une méthode de rétropropagation du gradient sur la base de la valeur d'erreur. Les méthodes d'apprentissage de type profond, basées sur la rétropropagation du gradient, sont connues par la personne du métier et ne sont pas donc pas décrites plus en détail ici.

Selon un mode de réalisation, la fonction de coût focalisée a pour rôle d'indiquer au réseau 202, lors de la rétropropagation de l'erreur, quels pixels sont fortement bruités. A titre d'exemple, le coefficient $\lambda_{LFF}$ est supérieur au coefficient $\lambda_{LFM}$.

La figure 3 est un schéma par blocs illustrant une architecture du réseau 202 configurée pour effectuer des opérations de régression, selon un mode de réalisation de la présente description.

A titre d'exemple, une fois entraîné, le réseau 202 est implémenté dans un dispositif de traitement d'image. A titre d'exemple, le dispositif de traitement comprend en outre un imageur (non illustré) configuré pour capturer des scènes images sur la base d'un motif de matriçage tel que par exemple une des motifs 100, 102, 104, 108 ou 110 décrits en relation avec la figure 1. A titre d'exemple, l'imageur comprend un ou plusieurs mauvais pixels, ou pixels dysfonctionnels. A titre d'exemple, le dispositif est un appareil photo, une caméra, un téléphone intelligent, etc.

Une fois l'entrainement du réseau 202 terminé, c'est à dire suite à la réalisation de l'entrainement décrit en relation avec la figure 2 sur une pluralité d'images de vérité terrain Y_true, le réseau 202 est par exemple configuré pour effectuer des opérations de régression sur une image d'entrée Y_in, remplaçant les données Y_bad, comprenant par exemple un ou plusieurs mauvais pixels. A titre d'exemple, l'entrainement est terminé suite au traitement d'un grand nombre, par exemple d'au moins 1000, images de vérité terrain. Dans un autre exemple, l'entrainement se termine lorsque l'algorithme d'apprentissage converge, c'est à dire lorsque la valeur d'erreur devient inférieure à une valeur seuil.

L'opération de régression, effectuée par le réseau 202 entrainé consiste alors à générer une image dématricée et reconstruite Y_out sur la base d'une image d'entrée matricée Y_in, fournie par exemple par l'imageur. Le réseau 202 entrainé comprend alors, par exemple, les sous modules 204, 206 et 208 dont les paramètres sont fixés suite à l'entrainement. L'image matricée Y_in est alors fournie directement au réseau 202, sans passer par le module d'augmentation 200. De même, l'image dématricée et reconstruite Y_out n'est pas fournie au circuit de calcul 210. Le module d'augmentation 200 et le circuit de calcul 210 ne font, par exemple, pas partie du dispositif de traitement dans lequel est implémenté le réseau 202 entrainé.

Le réseau 202 entrainé est alors par exemple configuré pour effectuer des opérations de régression, d'interpolation, de débruitage, et de détection et de correction des mauvais pixels détectés dans l'image d'entrée Y_in et pour générer l'image corrigée Y_out sur la base de ces opérations. En particulier, suite à l'entrainement, le sous module de traitement 204 du réseau 202 est par exemple configuré pour générer une donnée intermédiaire Y_tmp en réalisant une première estimation des informations manquantes ou bruitées, dues au moins en partie aux mauvais pixels.

Suite à l'entrainement, le sous module 206 est par exemple configuré pour générer une donnée d'attention Y_pwa, sur la base de l'image d'entrée Y_in et/ou de la donnée intermédiaire Y_tmp. Le sous module 206 est alors par exemple configuré pour détecter, individuellement pour chaque pixel, si ce pixel est un mauvais pixel ou non. Le taux de réussite de la détection des mauvais pixels dépend bien entendu de l'entrainement et du niveau d'expressivité, lié à sa structure interne, du réseau 202. Le sous module 206 génère alors une donnée Y_pwa comprenant des indications sur les aberrations détectées ainsi que sur leur localisation dans l'image d'entrée Y_in. A titre d'exemple, la détection est une détection multi-échelle et la donnée Y_pwa fournit un contexte, par exemple une indication de catégorie parmi, entre autres, un type de contour, de texture, de présence et niveau de bruit et de positions des pixel aberrants, pixel par pixel.

Suite à l'entrainement, le sous module 208 est par exemple configuré pour générer l'image dématricée Y_out sur la base de la donnée intermédiaire Y_tmp et de la donnée d'attention Y_pwa. A titre d'exemple, le sous module 208 est configuré pour corriger les zones identifiées, par la donnée Y_pwa, comme étant en dehors de la statistique principale, c'est à dire comme les zones comprenant un ou plusieurs mauvais pixels.

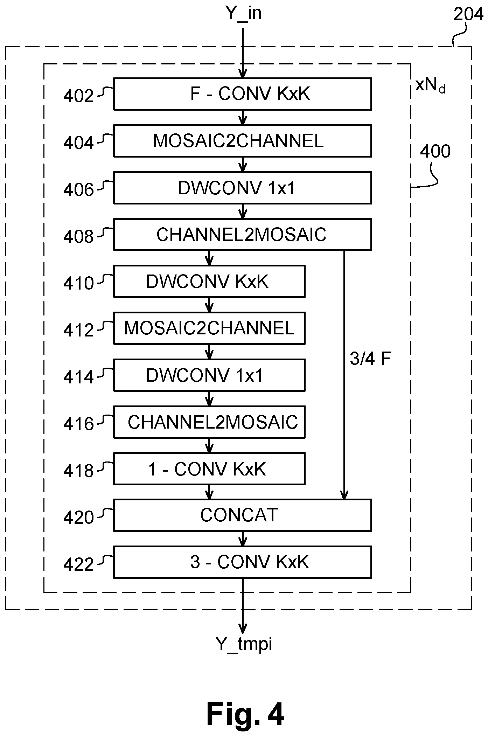

La figure 4 est un exemple d'architecture du sous module de traitement 204 selon un mode de réalisation de la présente description.

A titre d'exemple, le sous module 204 comprend une pluralité de sous réseaux 400. A titre d'exemple, le sous module 204 comprend un nombre Nd, Nd étant un entier supérieur à 2, de préférence supérieur ou égal à 5 et inférieur ou égal à 12, de sous réseaux 400.

A titre d'exemple, chaque sous réseau 400 est configuré pour recevoir l'image d'entrée Y_in et pour générer, chacun, une donnée intermédiaire Y_tmpi. Les Nd données intermédiaires Y_tmpi sont ensuite concaténés, par exemple dans l'axe des canaux ou dans un axe supplémentaire.

Chaque sous réseau 400 comprend, par exemple, une pluralité de couches. A titre d'exemple, l'image d'entrée Y_in est fournie à une couche de convolution 402 (F- CONV KxK). A titre d'exemple, la couche 402 est une couche de convolution à deux dimensions et à F canaux en sortie, F étant un entier supérieur ou égal au nombre de pixels dans le motif de matriçage, et comprenant des noyaux de taille $K \times K$, où K est un entier strictement supérieur à la largeur et/ou hauteur du motif de matriçage.

A titre d'exemple, la sortie générée par la couche 402 est fournie à une couche 404 (MOSAIC2CHANNEL). A titre d'exemple, la couche 404 est une couche dites de mélange de pixels (en anglais « pixel shuffle ») configurée pour réarranger spatialement les canaux de proche en proche de la donnée lui étant fournie. En particulier, la couche 404 est configurée pour effectuer une opération dite « espace vers profondeur » (en anglais « space to depth »). De plus, l'opération effectuée est paramétrisée par la taille du motif de matriçage considéré.

A titre d'exemple, la sortie générée par la couche 404 est fournie à une couche 406 (DW CONV 1x1). A titre d'exemple, la couche 406 est une couche de convolution en profondeur (en anglais « Depth Wise convolution ») comprenant des noyaux de taille 1x1 permettant ainsi une pondération de chaque canal de manière indépendante.

A titre d'exemple, la sortie générée par la couche 406 est fournie à une couche 408 (MOSAIC2CHANNEL). A titre d'exemple, la couche 408 est une couche de mélange de pixels, par exemple similaire à la couche 404.

A titre d'exemple, la sortie générée par la couche 408 est fournie à une couche 410 (DW CONV KxK). A titre d'exemple, la couche 410 est une couche de convolution en profondeur comprenant des noyaux de taille KxK.

A titre d'exemple, la sortie générée par la couche 410 est fournie à une couche 412 (MOSAIC2CHANNEL). A titre d'exemple, la couche 412 est une couche de mélange de pixels, par exemple similaire aux couches 404 et 408.

A titre d'exemple, la sortie générée par la couche 412 est fournie à une couche 414 (DW CONV 1x1) similaire à la couche 406.

A titre d'exemple, la sortie générée par la couche 414 est fournie à une couche 416 (CHANNEL2MOSAIC) dites de mélange de pixels. En particulier, la couche 416 est configurée pour effectuer une opération dite « profondeur vers espace » (en anglais « depth to space »). De plus, l'opération effectuée est paramétrisée par la taille du motif de matriçage considéré.

A titre d'exemple, la sortie générée par la couche 416 est fournie à une couche 418 (1 - CONV KxK) . A titre d'exemple, la couche 418 est une couche de convolution à deux dimensions et à un unique canal en sortie et comprenant des noyaux de taille $K \times K$.

A titre d'exemple, une couche d'agrégation par concaténation 420 (CONCAT) est configurée pour effectuer une concaténation des données en sortie des couches 418 et 408. A titre d'exemple, les données en sortie de la couche 408 sont fournies à la couche 420 par l'intermédiaire d'un branchement dit de « saut de connexion » (en anglais « skip connection »). Le branchement est alors configuré pour fournir, par exemple, ¾ des canaux de sortie de la couches 408 directement à la couche 420.

La concaténation générée par la couche 420 est par exemple fournie à une couche de convolution 422 (3 - CONV KxK). A titre d'exemple, la couche 422 est une couche de convolution à deux dimensions et à trois canaux en sortie et comprenant des noyaux de taille $K \times K$. A titre d'exemple, les trois canaux de sorties sont les trois canaux couleur RGB. La couche 422 est alors configurée pour générer la donnée de sortie Y_tmpi, correspondant à, par exemple, un premier dématriçage et reconstruction de l'image d'entrée.

_A titre d'exemple, la donnée Y_pwa est injectée dans le modèle du réseau 206 afin de calculer tout ou partie de la donnée intermédiaire Y_tmp.

Selon un mode de réalisation, les paramètres des sous réseau 400 sont appris lors de l'apprentissage du réseau 202 décrit en relation avec la figure 2.

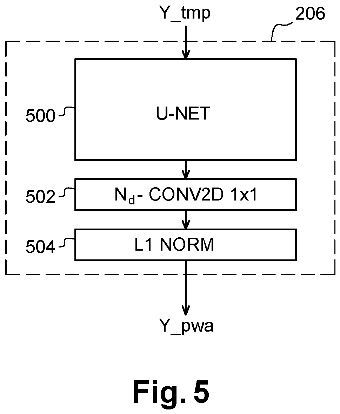

La figure 5 est un exemple d'architecture du module d'attention 206, selon un mode de réalisation de la présente description.

Le sous module 206 ayant pour tâche de détecter, pixel par pixel, les mauvais pixels, une architecture utilisée pour la segmentation d'images est adéquate pour l'implémentation du sous module 206.

A titre d'exemple, le sous module 206 comprend alors un réseau 500 (U-NET) de type U-net. Dans d'autres exemple, le réseau 500 est un type de réseau autre que le U-net configuré pour effectuer des opérations d'image à image. A titre d'exemple, le réseau 500 est une variante et/ou une amélioration d'un réseau de type U-net. A titre d'exemple, le réseau 500 est configuré en outre pour mettre en oeuvre des mécanismes d'attention interne et/ou pour manipuler des données à 2, ou 3, dimensions. A titre d'exemple, le réseau 500 comprend en outre une structure d'interconnexion dense.

A titre d'exemple, le réseau 500 est un réseau de type U-net ayant une profondeur type égale à 4 et comprenant des blocs de convolution de champs réceptifs de $5 \times 5$ avec une activation de type ReLU. Dans un exemple, le réseau 500 de type U-net est basé sur des blocs de convolution comprenant deux convolutions $3 \times 3$ par groupe, chacune suivie d'un mélange des canaux. Cet exemple est spécifique et permet de limiter la complexité du réseau 500 et d'appliquer des champs réceptifs de $5 \times 5$. La personne du métier saura adapter et moduler les tailles des champs réceptifs ainsi que le nombre de groupes de convolutions. A titre d'exemple, le réseau 500 est configuré pour effectuer en outre une opération de sous échantillonnage, telle qu'une opération dite « stride », par exemple mise en oeuvre par une couche dite de MaxPooling. A titre d'exemple, le sous échantillonnage est un sous échantillonnage par 2, correspondant à une opération de MaxPooling 2x2. A titre d'exemple, le réseau 500 comprend en outre des étages de normalisation permettant de limiter l'impact de l'amplitude absolue des données sur les opérations d'inférence. Dans un autre exemple, lorsque l'amplitude absolue des données est un élément pris en compte dans la détection des mauvais pixels, le réseau 500 comprend au moins un chemin non normalisé. Les sauts de connexion (en anglais « skip connexion ») sont mis en oeuvre par une opération d'agrégation, par exemple une concaténation. A titre d'exemple, une opération de suréchantillonnage est réalisée par une convolution ayant un pas de 2.

A titre d'exemple, le réseau 502 est configurée pour fournir la donnée qu'il génère à une couche 504 (L1 NORM). La couche 504 est configurée pour normaliser la valeur reçue, par exemple par application d'une normalisation effectuée dans l'axe des canaux et notée NL1. L'application de la normalisation NL1 permet que la somme des Nd données intermédiaires soit égale à 1. A titre d'exemple, l'application de la normalisation NL1 s'effectue par l'intermédiaire d'une fonction d'activation de type softmax, ou softargmax. En effet, la fonction softargmax(.) est égale à NL1(exp(.)). La fonction argmax renvoie donc aussi une sortie dont la somme des éléments est égale à 1. Ainsi, les différentes reconstructions de la donnée intermédiaire Y_tmp sont sommées de manière normalisée. A titre d'exemple, la couche 504 est configurée pour recevoir une donnée ayant pour forme un tenseur $T \in R^{I \times J \times C}$, I et J étant, respectivement, le nombre de lignes et de colonne de pixels dans l'image et C étant le nombre de canaux du tenseur. A titre d'exemple, pour le module 204, les valeur C et Nd sont égales. En notant la valeur du tenseur T à la position [i,j] dans l'image et pour un canal c, T[i,j,c], la couche 504 est par exemple configurée pour normaliser, pour chaque position, le tenseur effectuant la transformation :

[Math 1]

$$NL1(T[i,j,c]) = T[i,j,c]/\sum_{c=1}^{c}|T[i,j,c]|\,.$$

De plus, la normalisation NL1 est appliqué sur des données positives, issues d'une fonction d'activation du réseau 500.

Dans un autre exemple, afin d'éviter une potentielle division par 0, la norme L1 du tenseur, à la position [i,j] est définie telle que

[Math 2]

$$NL1(T[i,j,c]) = T[i,j,c]/(\sum_{c=1}^{c}|T[i,j,c]| + \varepsilon)\,,$$

où $\varepsilon$ est un nombre réel, strictement supérieur à 0.

Encore dans un autre exemple, la normalisation NL1 du tenseur, à la position [i,j] est définie telle que $NL1(T[i,j,c])$ = 0 ou bien $NL1(T[i,j,c])$ = 1/C, si $\sum_{c=1}^{C}|T[i,j,c]| < \varepsilon$ et $NL1(T[i,j,c]) = T[i,j,c]/\sum_{c=1}^{C}|T[i,j,c]|$ sinon.

A titre d'exemple, la donnée de sortie Y_pwa du module 206 correspond alors à la normalisation NL1, définie selon un des exemples ci-dessus, du tenseur en sortie du réseau de segmentation 500.

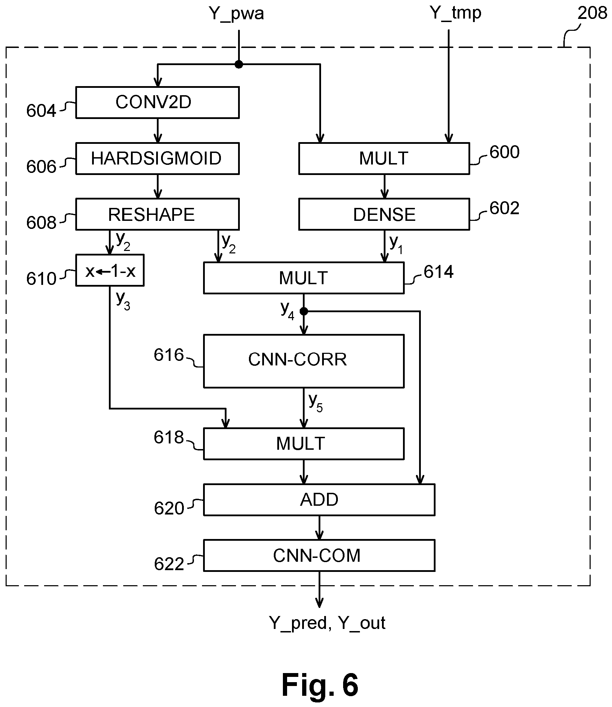

La figure 6 est un exemple d'architecture du réseau de raffinement 508, selon un mode de réalisation de la présente description.

Comme décrit en relation avec les figures 2 et 3, le sous module 208 est configuré pour générer la sortie Y_pred, lors de l'entrainement du réseau 202, ou Y_out lors de l'exécution du réseau 202 entraîné. Les données d'entrée sont alors utilisées pour inférer la donnée de sortie. La donnée Y_pwa est, par exemple, utilisée pour sélectionner les sorties Y_tmpi des sous réseaux 600. La donnée Y_pwa est, par exemple, utilisée en outre pour indiquer le type de traitement, par exemple un masquage, à réaliser sur la donnée Y_tmp résultante des premiers dématriçage et reconstruction, réalisés par le sous module 204.

A titre d'exemple, le sous module 208 comprend une couche 600 (MULT) configurée pour effectuer une opération de multiplication, par exemple point à point, du tenseur Y_tmp sur la base des valeurs du tenseur d'attention Y_pwa. Dans un autre exemple, la couche 600 est configurée pour effectuer une opération de multiplexage du tenseur Y_tmp sur la base des valeurs du tenseur d'attention Y_pwa. Dans l'exemple où la couche 600 est configurée pour effectuer une opération de multiplexage, une fonction d'activation du module 206 est de type argmax. La sortie de la couche 600 est alors, par exemple, fournie à une couche dense 602. La couche dense 602 est alors configurée pour générer une sortie $Y_1$ sur la base de la donnée fournie par la couche 600. A titre d'exemple, la sortie $Y_1$ correspond à une liste de D combinaisons linéaires des sorties de la couche 600, générant ainsi un tenseur de taille $W \times H \times N_c \times D$, où W est la largeur en pixel de l'image, H la hauteur en pixel de l'image et où Nc réfère par exemple au trois canaux couleur et où $D$ est la dimension dans l'axe 4 du tenseur. La valeur de $D$ dépend par exemple de la topologie, ainsi que des hyperparamètres du réseau 202.

Le sous module 208 comprend en outre une couche de convolution 604 (CONV 2D) configurée pour effectuer une opération de convolution sur le tenseur Y_pwa. Le résultat de la couche 604 est ensuite fourni à une couche 606 (HARDSIGMOID) . A titre d'exemple, la couche 606 est configurée pour appliquer une fonction d'activation, par exemple une fonction de type HardSigmoid, à la donnée reçue.

La couche 606 est ensuite configurée pour fournir sa sortie à une couche 608 (RESHAPE). A titre d'exemple, la couche 608 est configurée pour redimensionner la donnée fournie par la couche 606 en un tenseur $Y_2$ de taille $W \times H \times Nc \times D$.

A titre d'exemple, le tenseur $Y_2$ est fourni à une couche 610 (x<-1-x) configurée pour générer un tenseur $Y_3$ en inversant, par rapport à 1, les valeurs du tenseur $Y_2$. Le tenseur $Y_2$ et la donnée $Y_1$ sont en outre fournies à une couche 612 (MULT) similaire à la couche 600. A titre d'exemple, la couche 612 est configurée pour générer une donnée $Y_4$ sur la base des données $Y_1$ et $Y_2$.

La donnée $Y_4$ est fournie à une couche 616 (CNN-CORR). La couche 616 est, par exemple, une couche de convolution, ou une cascade de couches de convolution, configurée pour générer une donnée $Y_5$ des défauts détectés à l'aide du tenseur Y_pwa. Ainsi, les parties de l'image d'entrée étant détectées comme étant à corriger sont lissées.

La couche 616 est en outre configurée pour fournir la donnée $Y_5$ à une couche 618 (MULT). La couche 618 est en outre configurée pour recevoir la donnée $Y_3$, fournie par la couche 610, et pour générer une donnée $Y_6$ en effectuant une opération similaire à celle effectuée par les couches 600, 612 et 614.

Le sous module 208 comprend en outre une couche 620 (ADD). A titre d'exemple, la couche 620 est une couche d'agrégation additionnelle. La couche 620 est par exemple configurée pour recevoir la donnée $Y_4$ et la donnée en sortie de la couche 618 et pour les additionner.

Le sous module 208 comprend en outre une couche 622 (CNN-COM) configurée pour générer la donnée de sortie Y_pred ou Y_out sur la base de la sortie de la couche 620. A titre d'exemple, la couche 622 est une couche de convolution, ou une cascade de couches de convolution, configurée pour mettre en forme les données de sortie. A titre d'exemple, la mise en forme comprend une ou plusieurs rotations et/ou des ajustement colorimétrique et/ou des opérations de lissage et/ou de décalage, etc.

Selon un mode de réalisation, l'usage de la fonction d'activation, de type HardSigmoid, permet une détection de type on/off des mauvais pixels et de réaliser une opération similaire à un multiplexage en utilisant des couches d'agrégations multiplicatives et une couche d'agrégation additionnelle.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, pour ce qui est des types des fonctions de coût combinées à la fonction de cout focalisée, des variantes sont possibles. De même, la conception, ainsi que la topologie, des modules 204, 206 et 208 peut varier.

Enfin, la mise en oeuvre pratique des modes de réalisation et variantes décrits est à la portée de la personne du métier à partir des indications fonctionnelles données ci-dessus. En particulier, la mise en oeuvre pratique d'un type d'imageur voulu est à la portée de la personne du métier.

## Revendications

1. Procédé d'apprentissage d'un réseau de neurones (202) configuré pour réaliser des opérations de traitement d'images, le procédé comprenant :

   - la génération d'une image modifiée (Y_bad), par un générateur de données modifiées (200), sur la base d'une première image (Y_true), l'image modifiée comprenant au moins une valeur de pixel aberrante par rapport à la première image ;
   - la fourniture de l'image modifiée au réseau ;
   - la génération, par le réseau, d'une image corrigée (Y_pred) ;
   - la fourniture de l'image corrigée, par le réseau, et la fourniture d'une indication (Y_aug) de la position de l'au moins un pixel modifié, par le générateur, à un circuit de calcul (210)
   - la génération d'une valeur d'erreur, sur la base de l'application d'une fonction de coût, par le circuit de calcul, prenant en entrée la première image, l'indication et l'image corrigée ;
   - la correction de paramètres associés au réseau par rétropropagation de l'erreur dans le réseau.

2. Procédé selon la revendication 1, dans lequel, la génération de l'image corrigée (Y_pred) par le réseau (202) comprend :

   - la génération, par un premier sous module (204), d'une valeur de donnée intermédiaire (Y_tmp) sur la base de l'image modifiée (Y_bad), la donnée intermédiaire étant une reconstruction au moins partielle de la première image ;
   - la génération, par un deuxième sous module (206) du réseau (202), d'une donnée d'attention (Y_pwa) sur la base d'une de la donnée intermédiaire et/ou de l'image modifiée, la donnée d'attention comprenant une estimation de localisation de l'au moins un pixel modifié ;
   - la génération de l'image corrigée (Y_pred), par le premier sous circuit ou par un troisième sous circuit (208), sur la base de la donnée intermédiaire et de la donnée d'indication.

3. Procédé selon la revendication 2, dans lequel la génération de la donnée d'attention (Y_pwa) comprend l'exécution d'un réseau de neurones convolutif configuré pour la segmentation d'images (500), sur la base de la donnée intermédiaire (Y_tmp) et/ou de l'image corrigée (Y_bad).

4. Procédé selon la revendication 3, dans lequel le réseau de neurones convolutif (500) est un réseau de type U-net ou une variante d'un réseau de type U-net.

5. Procédé selon la revendication 3 ou 4, dans lequel la génération de la donnée d'attention (Y_pwa) comprend en outre une normalisation de type NL1, sur la base de la donnée générée par le réseau de neurones convolutif.

6. Procédé selon l'une quelconque des revendications 2 à 5, dans lequel la génération de l'image corrigée comprend une opération de multiplexage et/ou une opération de multiplication, par exemple une multiplication point à point, sur la base de la donnée d'attention (Y_pwa) et de la donnée intermédiaire (Y_tmp).

7. Procédé selon l'une quelconque des revendications 1 à 6, dans lequel la génération d'une valeur d'erreur comprend l'application d'une fonction de coût focalisée (LFF) prenant, en données d'entrée, l'image modifiée (Y_pred), la première image (Y_true) et l'indication de localisation de l'au moins un pixel modifié (Y_aug).

8. Procédé selon la revendication 7, dans lequel la génération d'une valeur d'erreur comprend en outre l'application :

   - d'une fonction de coût basée sur un calcul de moyenne (LFM) prenant, en données d'entrée, l'image modifiée (Y_pred) et la première image (Y_true) ; et/ou
   - d'une fonction de de régularisation (LR) prenant, en donnée d'entrée, l'image modifiée (Y_pred).

9. Procédé selon l'une quelconque des revendications 1 à 8, dans lequel la première image est comprise dans une base de données.

10. Procédé selon l'une quelconque des revendications 1 à 9, dans lequel la génération de l'image modifié comprend, pour chaque pixel :

   - la détermination de si le pixel est à modifier ; et
   - si le pixel est à modifier, le remplacement de la valeur associée au pixel par une valeur aberrante.

11. Procédé selon l'une quelconque des revendications 1 à 10, dans lequel la génération de l'image modifiée (Y_bad), par le générateur de données modifiées (200), est réalisée en outre sur la base d'un motif de matriçage.

12. Procédé selon l'une quelconque des revendications 1 à 11, dans lequel le modèle du générateur de données modifiées (200) est un modèle de réseau de neurone préalablement entraîné à la génération d'image modifiée, et configuré pour la mise en oeuvre de technique dites de « transfert de style ».

13. Procédé de traitement d'image comprenant :

   - la capture d'une scène image, par un imageur d'un dispositif de traitement d'image, l'image capturée étant une image matricée selon un motif de matriçage
   - la fourniture de l'image matricée à un réseau de neurones du dispositif de traitement entraîné selon le procédé d'entrainement selon l'une quelconque des revendications 1 à 12 ; et
   - la génération d'une image corrigée, par le réseau, sur la base de l'image matricée.

14. Procédé de traitement d'image selon la revendication 13, dans lequel la génération de l'image corrigée par le réseau comprend :

   - la fourniture de l'image matricée à un premier sous module (204) du réseau (202) configuré pour générer une donnée intermédiaire (Y_tmp) en effectuant un premier dématriçage de l'image matricée ;
   - la fourniture de la donnée intermédiaire à un deuxième sous module du réseau (206) configuré pour générer une donnée d'attention (Y_pwa) sur la base de la donnée intermédiaire, la donnée d'attention comprenant des estimations de localisation de pixels dysfonctionnels de l'imageur ; et
   - la génération de l'image corrigée, par un troisième sous module (208), sur la base de la donnée intermédiaire et de la donnée d'attention.

15. Procédé de traitement d'image selon la revendication 13 ou 14, dans lequel le motif de matriçage correspond à un motif de matriçage utilisé lors de la génération d'une image modifiée pendant l'apprentissage du réseau (202).

16. Dispositif de traitement d'image comprenant :

- un imageur configuré pour capturer des scènes image, selon un motif de matriçage ;
- un réseau de neurone (202) entraîné selon le procédé d'entrainement selon l'une quelconque des revendications 1 à 12, configuré pour générer une image corrigée sur la base de l'image matricée.

17. Dispositif de traitement d'image selon la revendication 16 dans lequel l'imageur comprend un ou plusieurs pixels dysfonctionnels.

100

| G | R |
|---|---|
| B | G |

102

| G | G | R | R |
|---|---|---|---|
| G | G | R | R |
| B | B | G | G |
| B | B | G | G |

104

| G | G | G | R | R | R |
|---|---|---|---|---|---|
| G | G | G | R | R | R |
| G | G | G | R | R | R |
| B | B | B | G | G | G |
| B | B | B | G | G | G |
| B | B | B | G | G | G |

108

| G | R |
|---|---|
| B | IR |

110

| G | IR | R | IR |
|---|---|---|---|
| G | G | R | R |
| B | IR | G | IR |
| B | B | G | G |

# Fig. 1

Y_true

200  DATA AUGM  Y_aug

NEURAL NETWORK

Y_bad  204

ATTENTION MOD

206

Y_tmp

FIRST DEMOSAICING MOD

Y_pwa

202

Y_tmp

REFINEMENT MOD

208

Err  Y_pred

LOSS

210

**Fig. 2**

Y_in

204

ATTENTION MOD

206

Y_tmp

FIRST DEMOSAICING MOD

202

**Fig. 3**

Y_pwa

Y_tmp

REFINEMENT MOD

208

Y_out

Y_in

204

| | xN_d |
|---|---|
| 402 — F - CONV KxK | |
| 404 — MOSAIC2CHANNEL | |
| 406 — DWCONV 1x1 | 400 |
| 408 — CHANNEL2MOSAIC | |
| 410 — DWCONV KxK | |
| 412 — MOSAIC2CHANNEL | |
| 414 — DWCONV 1x1 | 3/4 F |
| 416 — CHANNEL2MOSAIC | |
| 418 — 1 - CONV KxK | |
| 420 — CONCAT | |
| 422 — 3 - CONV KxK | |

Y_tmpi

**Fig. 4**

**Fig. 5**

Y_pwa          Y_tmp          208

604 — CONV2D

606 — HARDSIGMOID          MULT — 600

608 — RESHAPE          DENSE — 602

$y_2$     $y_2$     $y_1$

610 — $x \leftarrow 1-x$          MULT — 614

$y_3$          $y_4$

616 — CNN-CORR

$y_5$

618 — MULT

620 — ADD

622 — CNN-COM

Y_pred, Y_out

**Fig. 6**

EP 4 604 048 A1

Europäisches
Patentamt

European
Patent Office

Office européen
des brevets

**RAPPORT DE RECHERCHE EUROPEENNE**

Numéro de la demande

EP 25 15 6840

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | FENG KAI ET AL: "Mosaic Convolution-Attention Network for Demosaicing Multispectral Filter Array Images", IEEE TRANSACTIONS ON COMPUTATIONAL IMAGING, IEEE, vol. 7, 4 août 2021 (2021-08-04), pages 864-878, XP011872051, ISSN: 2573-0436, DOI: 10.1109/TCI.2021.3102052 [extrait le 2021-08-17] * abrégé * * Algorithme 1; page 868 * | 1-17 | INV. G06T3/4015 G06N3/045 G06N3/084 |
| | ----- | | |
| Y | ELASRI MOHAMED ET AL: "Image Generation: A Review", NEURAL PROCESSING LETTERS , vol. 54, no. 5 11 mars 2022 (2022-03-11), pages 4609-4646, XP093201929, US ISSN: 1370-4621, DOI: 10.1007/s11063-022-10777-x Extrait de l'Internet: URL:https://link.springer.com/article/10.1007/s11063-022-10777-x/fulltext.html * section C * | 1-17 | |
| | ----- | | DOMAINES TECHNIQUES RECHERCHES (IPC) |
| | -/-- | | G06T G06N |

Le présent rapport a été établi pour toutes les revendications

| Lieu de la recherche | Date d'achèvement de la recherche | Examinateur |
|---|---|---|
| Munich | 8 mai 2025 | Blaszczyk, Marek |

EPO FORM 1503 03.82 (P04C02)

page 1 de 2

Europäisches
Patentamt

European
Patent Office

Office européen
des brevets

# RAPPORT DE RECHERCHE EUROPEENNE

Numéro de la demande

EP 25 15 6840

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WYTHOFF ET AL: "Backpropagation neural networks", CHEMOMETRICS AND INTELLIGENT LABORATORY SYSTEMS, ELSEVIER SCIENCE PUBLISHERS B.V. AMSTERDAM, NL, vol. 18, no. 2, 1 février 1993 (1993-02-01), pages 115-155, XP026482115, ISSN: 0169-7439, DOI: 10.1016/0169-7439(93)80052-J [extrait le 1993-02-01] * le document en entier * ----- | 1-17 | |
| A | Syu Nai-Sheng: "Learning Deep Convolutional Networks for Demosaicing", , 11 février 2018 (2018-02-11), pages 1-14, XP093200648, Extrait de l'Internet: URL:https://arxiv.org/abs/1802.03769 * le document en entier * ----- | 1-17 | |
| A | CHANG KAN ET AL: "A Two-Stage Convolutional Neural Network for Joint Demosaicking and Super-Resolution", IEEE TRANSACTIONS ON CIRCUITS AND SYSTEMS FOR VIDEO TECHNOLOGY, vol. 32, no. 7, 1 juillet 2022 (2022-07-01), pages 4238-4254, XP093201575, USA ISSN: 1051-8215, DOI: 10.1109/TCSVT.2021.3129201 * le document en entier * ----- | 1-17 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| Munich | 8 mai 2025 | Blaszczyk, Marek |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................................
& : membre de la même famille, document correspondant

EPO FORM 1503 03.82 (P04C02)

page 2 de 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **HOYER, H. et al.** Unsupervised Image-to-Image Translation : A review. *Sensors*, 2022

- **BROWNLEE, J.** *A Gentle Introduction to CycleGAN for Image Translation*, 17 August 2017